# EUROPEAN PATENT APPLICATION

(11) **EP 0 972 601 A2**
(43) Date of publication of application: **19.01.2000**
(21) Application number: 99113640.9
(22) Date of filing: 13.07.1999
(51) Int. Cl.: B23D 45/02, B23D 47/02

(54) **Circular saw with a saw carriage being mounted on a pivoted lever**

(30) Priority: 14.07.1998 IT MO980155; 26.11.1998 IT MO980241
(71) Applicant: TOMESANI Giuliano, I-41100 Modena (IT)
(72) Inventor: TOMESANI Giuliano, I-41100 Modena (IT)
(74) Representative: Modiano, Guido, Dr.-Ing.

(57) **Abstract**

A portable radial cropping machine (1) with a wide cutting stroke for profiled elements and the like, comprising a footing (2) including a supporting and working surface (3) for the profiled elements on which there acts an upper head provided with a supporting frame for a motorized circular saw blade; the head (4) is supported on the supporting and working surface by an arm (7) composed of at least two consecutive segments which are mutually articulated in a compass-like configuration which can be extended from a proximal acute-angle configuration to a distal obtuse-angle configuration after slidingly resting on guiding means, a first segment of the arm being provided for connection to the supporting and working surface, a second segment being meant to support the head, which is also provided with automatically-extending means for fully protecting the active portion of the blade.

## Description

The present invention relates to a portable radial cropping machine with wide cutting stroke for profiled elements and the like.

Cropping machines, known as radial owing to their ability to operate in a radial direction, have long been known and used by operators in the field for cropping profiled elements of different kinds at building yards.

These machines essentially consist of a head on which a circular saw is mounted; such saw is driven by a corresponding motor and is in turn supported in an articulated manner to a frame which acts as an actual footing for the cropping machine and as a workbench on which the profiled elements to be cropped are placed.

The heads of known cropping machines are, as mentioned, provided with an articulation in order to allow to crop the profiled elements with different spatial angles and are mounted so as to slide back and forth with respect to the position of the operator on strong horizontal guides, known as rods, in order to be able to perform cuts having a given depth.

Moreover, in compliance with applicable accident-prevention standards, they must be provided with blade protections so that the cutting region of the blade cannot be accessed even accidentally with one's hands.

In practice, the spatial movement of the heads provides for a combination of possible movements which include straight-line translatory motion on the rods back and forth with respect to the operator, rotation with a bilateral diagonal tilting of the blade and rotation about a vertical axis which passes substantially at the initial region of the rods.

However, the shape of the articulations and most of all the possible extension of the rods limit the operating capability in known cropping machines: essentially, the profiled elements on which the conventional machines can work must have dimensions and cross-sections which are limited by the active stroke that can be performed by means of the heads on the rods, which if they were excessively long would cause the cantilever of the head, and therefore the weight of the latter, to reach values which would unacceptably reduce the precision of the cuts due to the onset of flexing and drift, by the rotation angle that they can assume, and by the useful gap between the blade and the profiled element supporting surface.

Ultimately, the maximum dimensions of the profiled elements must be contained to medium-low values and known cropping machines accordingly have limited operating capabilities if acceptable cutting precision is sought.

Moreover, in some cases the rods have produced intense friction, causing seizure of the elements that allow the sliding of the head thereon, and their slow but gradual deterioration also affects the cutting precision.

The aim of the present invention is to solve the above-described problems of the prior art, by providing a portable radial cropping machine with a wide cutting stroke for profiled elements and the like which allows to work on larger profiled elements than allowed by known cropping machines and at the same time has a simple structure which can be easily accessed for ordinary and extraordinary maintenance, has substantially compact dimensions and weights and does not lead to seizures and maintains its cutting precision unchanged over time.

This aim and other objects are all achieved by a portable radial cropping machine with a wide cutting stroke for profiled elements and the like, comprising a footing which includes a supporting and working surface for the profiled elements on which there acts an upper head provided with a supporting frame for a motorized circular blade, characterized in that the head is supported on the supporting and working surface by an arm composed of at least two consecutive segments which are mutually articulated in a compass-like configuration which can be extended from a proximal acute-angle configuration to a distal obtuse-angle configuration after slidingly resting on guiding means, a first segment of the arm being provided for connection to the supporting and working surface, a second segment being meant to support the head.

Further characteristics and advantages will become apparent from the description of a preferred embodiment of a portable radial cropping machine with a wide cutting stroke for profiled elements and the like, illustrated only by way of non-limitative example in the accompanying drawings, wherein:
Figure 1 is a perspective view of the cropping machine according to the invention;

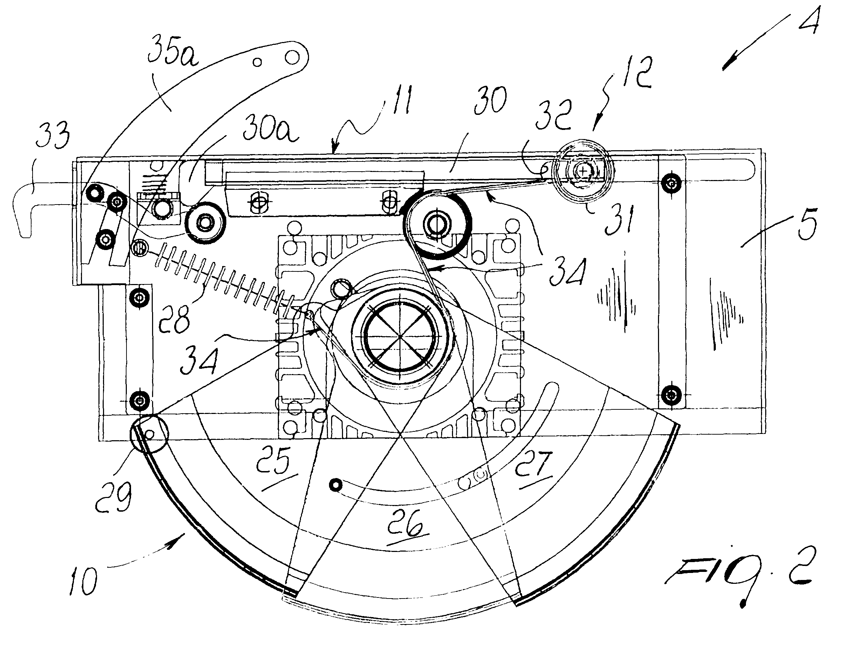

Figure 2 is an enlarged-scale side view of the working head;

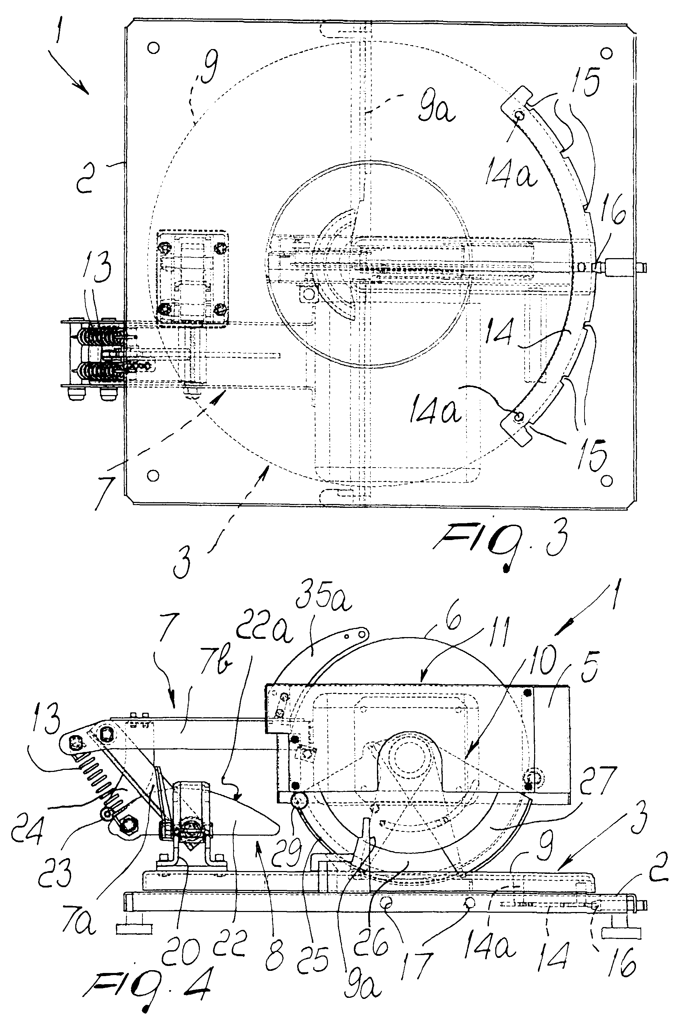

Figure 3 is a schematic bottom view of the footing of the cropping machine according to the present invention;
Figure 4 is a reduced-scale general schematic side view of the cropping machine;
Figure 5 is a schematic side view of the working head in an alternative and possible simplified embodiment, illustrating automatically-extending means for the integral protection of the active portion of the blade;
Figure 6 is a front view which corresponds to Figure 5;
Figures 7 and 8 are highly schematic side and top views of the automatically-extending means for the integral protection of the active portion of the blade in the retracted configuration in order to leave the blade exposed.

With reference to the above figures, the numeral 1 designates a portable radial cropping machine with a wide cutting stroke for profiled elements and the like, which comprises a footing 2 with a built-in surface 3 for supporting and working the profiled elements.

Above the surface 3 there is a head 4 which is provided with a supporting frame 5, of the box-like type in the particular case, for a motorized circular blade 6.

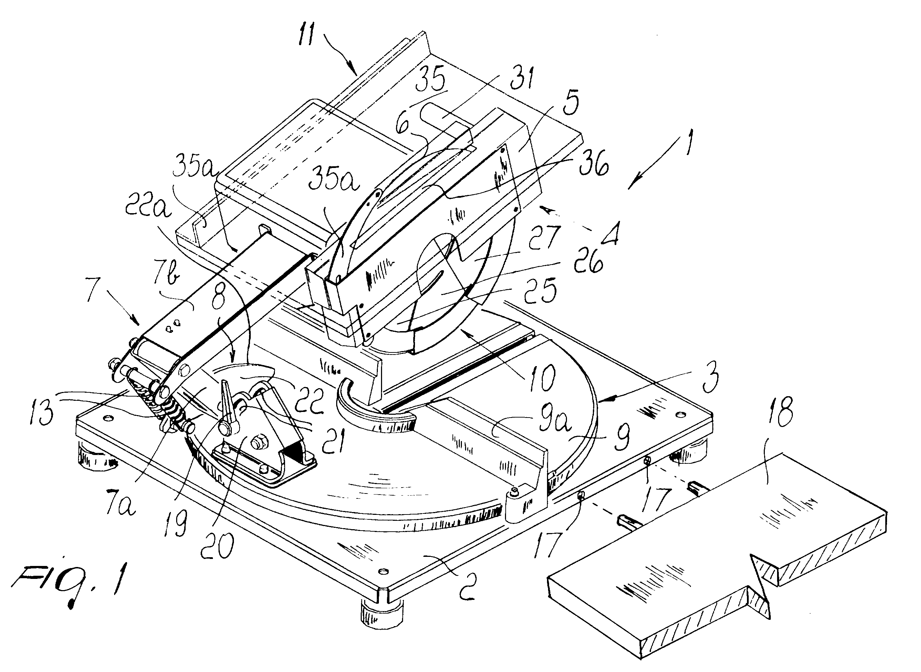

The head 4 is supported on the surface 3 by an arm 7 which is composed of at least two consecutive segments 7a and 7b which are articulated one another in a compass-like configuration so as to be able to extend from an acute-angle proximal configuration, as shown in Figures 1 and 4, to an obtuse-angle distal configuration, not shown for simplicity, after slidingly resting on guiding means 8; the first segment 7a of the arm 7 is meant for connection to the surface 3 and the second one is meant for actually supporting the head 4.

The supporting and working surface 3 is per se constituted by a circular platform 9 integrated and centered in a co-planar manner in the footing 2 and can rotate bidirectionally about a central vertical axis.

The head 4 is provided with automatically-extending means 10 for the integral protection of the active portion of the blade 6, with means 11 for longitudinally cutting the profiled elements, which are accommodated in an upper region thereof, and with manual means 12 for engagement or release with respect to the end of the segment 7b of the arm 7, all of which are more clearly specified hereinafter.

Elastic return means for the arm 7 are interposed between the arm, or more precisely between the segment 7b thereof and the guiding means 8, and are constituted by two helical traction springs 13.

The circular platform 9 is provided, in a downward region, with a flat plate 14 which is rigidly coupled thereto with corresponding spacers 14a and screw means and has a semicircular shape; in the front part thereof, i.e. the convex one that is directed outwards, there is a series of radial notches 15 arranged according to corresponding preselected angular sectors and can be geometrically coupled to an elastic retaining tooth 16 which is supported so as to be centered on a facing side of the footing 2.

The footing is provided, on two mutually opposite sides, with seats 17 for inserting co-planar surface extensions 18 thereof.

The base of the first segment 7a of the arm 7 is mounted so as to be able to slide and can be fixed through conventional screw-type locking means 19 on a support 20 which protrudes from the surface 3 and is provided with at least two parallel slots 21 substantially oblique and having a circular arc-like profile in which the base can engage.

The guiding means 8 are constituted by a plate 22 supported edgeways and rigidly on the upper face of the surface 3 and runs parallel to the longitudinal axis of the arm 7; its upper edge 22a has a convex eccentric profile, and a corresponding roller 23 is able to slide thereon and is supported freely at the lower end of a feeler tooth 24 which is rigidly mounted on the segment 7b.

The automatically-extending means 10 for the integral protection of the active portion of the blade 6 are constituted by a series of box-like circular sectors, three in the specific case, designated by the reference numerals 25, 26 and 27, which contain the active portion and are hinged together coaxially to the active portion; the sectors are rotationally and telescopically retractable in contrast with elastic return means, in practice a helical traction spring 28.

The circular head sector 25 is provided, in its lower region, with a feeler element for maintaining constant contact with a profiled element arranged on the working platform 9; this element is constituted by a roller 29 freely supported at the lowest end of the head sector 25.

The manual engagement/disengagement means 12 are constituted by a rod-like slider 30 which is mounted so as to be able to slide horizontally in the upper region of the box-like frame 5 and with a delimited stroke; the slider 30 can be actuated by means of a corresponding knob 31 which is rigidly coupled thereto and protrudes transversely through a corresponding slot 32 which is formed in the box-like frame 5, and its distal end 30a is hammer-shaped and co-operates by contact with a corresponding rocker-like hook 33 which is articulated and can move on a vertical plane with respect to the box-like body 5.

The slider 30 is connected in a parallel arrangement, through cable means 34, to at least the first head sector 25 so that the active traction stroke thereof toward the operator simultaneously causes both the lifting of the hook 33 and the rotation of said head sector 25 until it retracts into the next one 26.

Finally, the means 11 for the longitudinal cutting of the profiled elements are constituted by a second working surface 35 which is rigidly supported on the box-like frame 5 of the head 4 and on the second segment 7b of the arm 7, with interposed known position adjustment devices, and from which the upper portion of the blade 6 protrudes through a slot 36 formed therein.

In the alternative possible embodiment of the working head 4, the integral protection means 10 are again constituted by a set of three sectors which are designated by the reference numerals 103, 104 and 105 for clarity.

The sectors are hinged together at 106 to the frame 107 that supports the blade 102 coaxially thereto.

At least the first sector 103 of the sectors 103, 104 and 105 is provided with means 108 for maintaining constant resting against a part to be cropped, not shown for simplicity; the means are essentially constituted by a roller 108a which is mounted at the base of the sector 103 at the front lower edge.

The sectors 103, 104 and 105 are mutually connected to corresponding actuation means which are constituted by a pin 109 which protrudes transversely from the first sector 103 and which, as the sector gradually opens, is slidingly guided inside corresponding mutually aligned slots 110 and 111, each of which is formed respectively in the intermediate sector 104 and in the last sector 105.

When the blades 102 must be exposed, the sectors 103, 104 and 105 can be retracted into each other and can be retractably accommodated in the conventional box-like frames 107.

The last of the sectors, designated by the reference numeral 105, can be rotationally actuated in contrast with elastic return means, essentially constituted by a helical traction spring 112, whose ends are rigidly coupled respectively to an engagement point 113 which is rigidly coupled to the frame 107 and to the upper end 105a of the last sector 105.

The first sector 103 can be locked or released through corresponding actuation means 114, substantially constituted by an actuation rod 115 which is supported on the cropping machine so that it can slide horizontally and parallel to the blade 102; a block 116 is rigidly coupled to the rod 115 and the upper end 103a of the first sector 103 is in turn articulated to the block.

The rod 115 further forms a hook-shaped end 117 for engaging a recess 118 which is advantageously formed in the conventional frame of the cropping machine, and the opposite end is provided with an actuation button 119 for releasing or locking the sliding motion in contrast with elastic return means 120.

These means are constituted by a helical spring 121 which is wound perimetrically around the rod 115 and inserted between a retaining collar 122, which is keyed on the rod, and the button 118.

The operation of the invention is described hereinafter with reference to its preferred and more complete version, since the alternative embodiment of the working head 4 substantially has the same operation as the preferred embodiment.

A profiled element to be cropped is arranged on the supporting and working surface 3, constituted by the platform 9, which is provided with the conventional reference locators 9a against which the profiled element is to be rested transversely to the blade 6.

By optionally turning the surface 3 to the right or to the left it is possible to arrange the profiled element obliquely with respect to the blade 6; the rotation can occur by circular arcs of a preset extent.

By releasing the tooth 16, the surface 3/platform 9 can in fact be turned manually and locked again in the direction of a chosen notch 15 of the flat plate 14 in which the tooth 16 engages if it is released, locking the angular position of the working surface 3.

Once the profiled element to be cropped has been positioned, the operator grips and pulls the knob 31, making the slider 30 slide; the slider, by acting with the hammer-like end 30a on the hook 33, releases the head 4 from the arm 7, thus making it ready for cropping the profiled element and simultaneously, through the cable means 34, turns the head sector 25 inside the subsequent one 26 and possibly turns the latter inside the sector 27.

In this way the lower active portion of the blade 6 is exposed and rested against the profiled element to be cropped; before turning it, by gradually releasing the knob 31 the sectors 27, 26 and 25 are allowed to extend with respect to each other until the free roller 29 rests against the profiled element to be cropped: the sectors therefore cover all the portion of the blade 6 that lies between the box-like frame 5 and the profiled element proper, which are kept constantly in the configuration by the traction of the spring 28, therefore ensuring maximum safety for the operator during the cropping operation.

It is observed that as the depth of the cut varies, the sectors 25, 26 and 27 retract automatically, being pushed by the roller 29, and gradually automatically expose only the portion of the blade 6 required in order to increase the depth of the cut.

If the profiled element has considerable transverse dimensions, the operator, in order to crop it, can pull the head 4 toward himself; the arm 7 gradually extends and the segment 7b that physically supports said head 4 in a cantilevered manner performs a movement toward the operator; the path of the movement is guided by the profile of the upper edge 22a of the plate 22 on which the roller 23 of the feeler 24 rests.

The maximum possible extension of the movement is determined exclusively by the longitudinal dimensions of the segments 7a and 7b that compose the arm 7; it is in any case far greater than allowed by current cropping machines with heads mounted on rods, since the correct position of the head 4 is maintained even with considerable cantilever by means of the resting of the feeler 24 on the profile 22a, thus allowing to work on extremely wide profiled elements.

Moreover, if the cutting of the profiled element also has a diagonal orientation, the locking screw means 19 are loosened and after sliding the base of the segment 7a in the oblique slots 21 of the support 20 by the required extent the locking screw means 19 are tightened again once the position has been reached, and the blade 6 can thus cut with absolute precision even in the required diagonal direction.

It is also observed that if the longitudinal dimension of the profiled element is significant, it is possible to add to the footing 2 of the cropping machine 1 one or more bilateral extensions 18: this allows to arrange the profiled element so that it rests adequately along all or almost all of its length with flexing, particularly keeping straight the region on which the blade 6 is to work.

Finally, if it is necessary to also cut the profiled element longitudinally, it is sufficient to use the upper working surface 35 with which the cropping machine 1 is provided and from which the upper portion of the blade 6 protrudes through the slot 36; the upper surface 35, too, is of course provided with the usual reference locators, designated by the reference numeral 35a in the figures, against which the profiled element is to be rested for correct operation.

In practice it has been observed that the described invention achieves the intended aim.

The invention thus conceived is susceptible of numerous modifications and variations, all of which are within the scope of the inventive concept.

All the details may also be replaced with other technically equivalent ones.

In practice, the materials used, as well as the shapes and the dimensions, may be any according to requirements without thereby abandoning the scope of the protection of the appended claims.

The disclosures in Italian Patent Applications No. MO98A000155 and MO98A000241 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A portable radial cropping machine with a wide cutting stroke for profiled elements and the like, comprising a footing including a supporting and working surface for the profiled elements on which there acts an upper head provided with a supporting frame for a motorized circular blade, characterized in that the head is supported on the supporting and working surface by an arm composed of at least two consecutive segments which are mutually articulated in a compass-like configuration which can be extended from a proximal acute-angle configuration to a distal obtuse-angle configuration after slidingly resting on guiding means, a first segment of the arm being provided for connection to the supporting and working surface, a second segment being meant to support the head.

2. The cropping machine according to claim 1, characterized in that said working and supporting surface is constituted by a built-in circular platform which is centered in a co-planar arrangement in said footing and can be rotated bidirectionally around a central vertical axis.

3. The cropping machine according to claim 1, characterized in that said head is provided with automatically-extending means for fully protecting the active portion of said blade.

4. The cropping machine according to the preceding claims, characterized in that said head is provided with means for longitudinally cutting the profiled elements accommodated in an upper region thereof.

5. The radial cropping machine according to claim 1, characterized in that elastic return means are interposed between the arm and the guiding means.

6. The cropping machine according to claim 1, characterized in that the head is provided with means for manual engagement/disengagement from the end of the arm.

7. The cropping machine according to claim 2, characterized in that the built-in circular platform is provided, in a downward region, with a flat semicircular plate rigidly coupled thereto and is provided at the front with a series of radial notches formed according to corresponding preselected angular sectors which can be geometrically coupled to an elastic retainer tooth which is supported so as to be centered on a facing side of the footing.

8. The cropping machine according to claim 1, characterized in that the footing is provided, on two mutually opposite sides, with engagement seats for co-planar surface extensions thereof.

9. The cropping machine according to claim 1, characterized in that the first segment of the arm has a base which is mounted slidingly and so that it can be fixed with known locking means on a support which protrudes from the footing and is provided with at least one pair of parallel slots, which are substantially oblique and shaped so as to have a circular arc-like profile and in which the base of the first segment of the arm can be engaged.

10. The cropping machine according to claims 1 and 9, characterized in that the guiding means are constituted by a plate which is supported edgeways and rigidly on the upper face of the footing and runs parallel to the longitudinal axis of the arm, the upper edge of the plate having an eccentric convex profile on which a corresponding roller can run, the roller being supported freely at the lower end of a feeler tooth which is rigidly mounted on a segment of the arm.

11. The cropping machine according to claims 5 and 9, characterized in that the elastic return means are constituted by two helical traction springs which are interposed between the second segment of the arm and the support that protrudes from the footing.

12. The cropping machine according to claim 3, characterized in that the automatically-extending means for fully protecting the active portion of the blade are constituted by a series of box-like circular sectors which contain the active portion, are hinged together and coaxially to it, and mutually rotationally retract telescopically in contrast with elastic return means, at least the head circular sector being provided, in the lower region, with a feeler for maintaining constant contact with a profiled element arranged on the working surface.

13. The cropping machine according to claim 12, characterized in that the probe element is constituted by a roller which is freely supported at the lowest end of the head circular sector.

14. The cropping machine according to claim 12, characterized in that the sectors are mutually connected with corresponding movement means.

15. The cropping machine according to claim 14, characterized in that the movement means are constituted by a pin which protrudes transversely from a first sector and is slidingly guided inside corresponding aligned slots, each slot being formed in the intermediate and last sectors.

16. The cropping machine according to claims 12 to 15, characterized in that the sectors can be accommodated in a fully exposed configuration of the blades so as to retract in the conventional box-like frames for supporting the blades.

17. The cropping machine according to claims 12 to 16, characterized in that at least the last of said sectors can be rotationally actuated in contrast with elastic return means.

18. The cropping machine according to claim 17, characterized in that the elastic return means are constituted by at least one helical traction spring, whose ends are rigidly coupled respectively to an engagement point, which is rigidly coupled to the blade supporting frame, and to the upper end of the last sector.

19. The cropping machine according to claims 12 to 18, characterized in that at least the first sector can be locked/released through corresponding actuation means.

20. The cropping machine according to claim 19, characterized in that the actuation means are constituted by a rod which is supported horizontally with respect to the cropping machine and parallel to the blade and on which a block is rigidly coupled, the upper end of the first sector being articulated to the block, the rod having a hook-shaped end for engaging a recess formed in the conventional frame of the cropping machine and an opposite end provided with a release actuation button for sliding in contrast with elastic return means.

21. The cropping machine according to claim 20, characterized in that the return means are constituted by at least one helical spring which is wound perimetrically with respect to the rod between a retaining collar which is keyed thereto and the actuation button.

22. The cropping machine according to claims 1 and 6, characterized in that the manual engagement/release means are constituted by a rod-like slider which is mounted so as to slide horizontally in the box-like frame of the head with a delimited stroke and can be actuated by means of a corresponding knob which is rigidly coupled and protrudes transversely through a corresponding slot formed in the box-like frame, the distal end of the slider being hammer-shaped and cooperating by contact with a corresponding rocker-like hook which is articulated and movable on a vertical plane with respect to the box-like frame of the head.

23. The cropping machine according to claims 12 and 22, characterized in that the slider is connected in a parallel manner, by means of cable means, to at least the first head sector, the active traction stroke of the slider towards the operator simultaneously determining the lifting of the hook and the rotation of the head sector so that it retracts into the subsequent one.

24. The cropping machine according to claim 4, characterized in that the means for the longitudinal cutting of the profiled elements are constituted by a second working surface which is rigidly and adjustably supported on the box-like frame of the head and on the second segment of the arm, the upper portion of the blade protruding from the second working surface through a provided slot formed in the surface.
